# EUROPEAN PATENT APPLICATION

(11) **EP 1 439 248 A1**
(43) Date of publication of application: **21.07.2004**
(21) Application number: 03019570.5
(22) Date of filing: 02.09.2003
(51) Int. Cl.: D01F 9/127, D01F 11/12, C08K 7/06

(54) **Carbon nanotube dispersion liquid and method for producing the same and polymer composite and method for producing the same**

(30) Priority: 15.01.2003 JP 2003007363
(71) Applicant: FUJI XEROX CO., LTD., Minato-ku, Tokyo (JP)
(72) Inventor: Yoshizawa, Hisae, Ashigarakami-gun Kanagawa (JP); Watanabe, Hiroyuki, Ashigarakami-gun Kanagawa (JP)
(74) Representative: Forstmeyer, Dietmar, Dr. rer. nat., Dipl.-Chem.

(57) **Abstract**

By employing a method of producing a carbon nanotube dispersion liquid, in which a carbon nanotube modified with a basic or acidic functional group is dispersed in a polar solvent having a polarity opposite to a polarity of the functional group, there is provided a carbon nanotube dispersion liquid having a high dispersion stability, in which a carbon nanotube is uniformly dispersed without using any surfactant or the like. By using the carbon nanotube dispersion liquid, a polymer composite in which a carbon nanotube is uniformly dispersed without being mixed with an impurity can be provided. In addition, a method for producing the polymer composite by relatively simple procedures is also provided.

## Description

### Field of the Invention and Related Art Statement

The present invention relates to a carbon nanotube dispersion liquid useful for devices, functional materials, other structural materials, and the like, each containing the carbon nanotube as a main component, and to a method for producing such a carbon nanotube dispersion liquid. In addition, the present invention relates to a polymer composite in which a carbon nanotube is used as filler, and to a method for producing the polymer composite.

Developments of the present invention are expected to be spread out in the fields of spacecrafts, portable electronic devices, clothing items, and the like, which require lightweight and strong polymer composite. However, it is conceivable that applications of the carbon nanotube may be expanded in other extensive fields.

A fibrous carbon structure is generally called a carbon fiber. However, the carbon fiber to be used as a structural material with a diameter of several micrometers or more is insufficient in development of its cylindrical network structure in parallel with an axis of a tube. In addition, a carbon fiber obtained by vapor-phase thermal decomposition using a catalyst have a tubular network structure parallel to the axis of a tube and located near the center of the tube. In many cases, however, there are a number of amorphous carbons being attached around the network structure.

Apart from this, a carbon nanotube being discovered recently is a tubular material having a diameter of 1 µm or less. An ideal carbon nanotube has a tubular structure formed such that each face (graphene sheet) of a hexagonal carbon network structure extends in parallel with the axis of the tube. In this case, plural tubular structures may be used in multiple. In theory, it is conceivable that the carbon nanotube exhibits metallic property or semi-conductive property depending on the connecting patterns of hexagonal carbon network and the thickness of the tube. In addition, the carbon nanotube is also expected to be a future functional material owing to its strength.

In general, the carbon nanotube constructed of a single graphene sheet is referred to as a single-wall nanotube (hereinafter, abbreviated as "SWNT"). On the other hand, the carbon nanotube constructed of two or more graphene sheets is referred to as a multi-wallnanotube (hereinafter, abbreviated as "MWNT"). Although the structure of the carbon nanotube can be somewhat determined by selecting an appropriate synthetic method and conditions thereof, the manufacture of only carbon nanotubes having the same structure has not yet been successful.

The applications of systems in which carbon nanotubes are dispersed, for example, conductive pastes (see, for example, JP2000-63726A) and conductive ink (see, for example, JP11-34336A) using the carbon nanotubes described above, have been strongly expected and broadly studied. In these applications, the most important matter is the stability of dispersion of the carbon nanotubes.

The dispersion of carbon nanotubes is demanded in various fields. However, there are systems where carbon nanotubes cannot be dispersed from the beginning, causing hindrance in the applications of carbon nanotubes. Therefore, there is a demand for a technology for obtaining a carbon-nanotube dispersion liquid having a high dispersion stability in which a carbon nanotube is dispersed as uniformly as possible.

Furthermore, it has been known that dispersion of carbon nanotube such as those described above in polymer allows an increase in dynamical strength of the polymer (see, for example JP2002-105329A and JP11-263916A and Fabrication and Characterization of Carbon Nanotube/Poly(vinyl-alcohol) Composites, M. S. P. Shaffer et al., "Advanced Materials", Germany, WILEY-VCH, 1999, Vol.11, pages 937~941). However, the carbon nanotube by itself has poor wettability and dispersibility with respect to a solvent, so that the polymer needs to be provided with a considerable concentration of carbon nanotube for increasing the dynamic strength of the polymer. For instance, in Fabrication and Characterization of Carbon Nanotube/Poly(vinyl-alcohol) Composites, M. S. P. Shaffer et al., "Advanced Materials", Germany, WILEY-VCH, 1999, Vol.11, pages937^{~}941, it is described that 40% by weight or more of the carbon nanotube should be mixed with polyvinyl alcohol to cause a 20% increase in the storage elastic modulus of the polymer at 40 °C.

Furthermore, in Surfactant-Assisted Processing of Carbon Nanotube/Polymer Composites, X. Gong et al.,"Chemistry of Materials", USA, American Chemical Society, 2000, vol.12, pages1049^{~}1052, there is disclosed a fact that the addition of only 1% by weight of carbon nanotube allows a 30% increase in the storage elastic modulus of a polymer composite in which a carbon nanotube is dispersed in an epoxy resin using a surfactant. In this case, however, there is fear that the surfactant used as a dispersant may remain in the polymer composite to cause the migration of the surfactant with time, causing the polymer composite to be changed in quality. Furthermore, when the surfactant used is ionic, there is a possibility that the electric characteristics of the obtained polymer composite such that the polymer can not be used for an electronic device. In addition, there are many cases where 1% by weight or more of the surfactant is required for dispersing a carbon nanotube with the surfactant. Thus, the concentration of the surfactant needed will become even higher in many cases as the concentration of the carbon nanotube increases.

Furthermore, in JP11-263916A, a chemically-modified carbon nanotube is used to increase the compatibility of the carbon nanotube with a resin substrate. However, such chemical modification involves a little-complicated process, such as the introduction of a silicone-based functional group. It is also difficult to disperse the carbon nanotube directly and uniformly in the resin substrate even though the carbon nanotube has an increased compatibility with the resin substrate, so that much more dispersion energy is needed in mechanical stirring and so on. In many cases, in spite of such an effort, there is obtained only a polymer composite in which an aggregate of carbon nanotube is unevenly dispersed.

### Summary of the Invention

The present invention has been made in view of the above circumstances and provides a carbon nanotube dispersion liquid having a high dispersion stability, in which a carbon nanotube is uniformly dispersed without using any surfactant or the like, and a method for producing such a carbon nanotube dispersion liquid. In addition, the present invention further provides a polymer composite in which a carbon nanotube is uniformly dispersed without being mixed with an impurity such as a surfactant and a method for producing such a polymer composite by relatively simple procedures.

The above can be attained by the following aspects of the invention. According to an aspect of the invention, a carbon nanotube dispersion liquid including a carbon nanotube modified with a basic or acidic functional group is dispersed in a polar solvent having a polarity opposite to a polarity of the functional group.

In the carbon nanotube dispersion liquid of the present invention, a carbon nanotube to be used is one modified with a basic or acidic functional group, while a solvent to be used is one having a polarity opposite to the polarity of the functional group. The carbon nanotube is dispersed in the solvent to increase the affinity between the functional group on the carbon nanotube and the polar solvent, allowing the carbon nanotube to be mixed in the polar solvent. Therefore, according to the present invention, the carbon nanotube dispersion liquid having a high dispersion stability, in which the carbon nanotube is dispersed in a significantly uniform manner without using any surfactant or the like, can be easily obtained.

Here, the carbon nanotube dispersion liquid of the present invention may be preferably in a state where a precipitating surface is 20% or less of an upper portion when it is rested for 1 hour at normal temperature without developing a sedimentary surface. Such a carbon nanotube dispersion liquid having a high dispersion state can be easily stored. In addition, such a carbon nanotube dispersion liquid can be sufficiently provided with various kinds of characteristics and effects derived from its high dispersion stability when it is used in other applications such as obtaining a polymer composite.

According to another aspect of the present invention, amethod for producing a carbon nanotube dispersion liquid includes adding, through introduction, a basic or acidic functional group to a carbon nanotube and dispersing the carbon nanotube into a polar solvent having a polarity opposite to a polarity of the functional group.

It is known that the introduction of a functional group having a basic or acidic polarity into a carbon nanotube can be attained in a relatively easy manner. In the present invention, a functional group is introduced into a carbon nanotube (the addition process), followed by dispersing the functional group into a polar solvent having a polarity opposite to the polarity of the functional group (the dispersion process). Therefore, a carbon nanotube dispersion liquid having a high dispersion stability, in which the carbon nanotube is dispersed in an extremely uniform manner, can be easily obtained.

As described above, according to the method for producing the carbon nanotube dispersion liquid of the present invention, the carbon nanotube dispersion liquid having a high dispersion stability can be obtained. Preferably, the degree of such a high dispersion stability is such a state where a precipitating surface is 20% or less of an upper portion when it is rested for 1 hour at normal temperature without developing a sedimentary surface.

According to another aspect of the present invention, a polymer composite is obtained by volatilizing at least the polar solvent from a mixture solution containing at least a polymer in the carbon nanotube dispersion liquid in accordance with the above aspect of the present invention.

The polymer composite of the present invention does not contain any impurity such as a surfactant and is in a state in which a carbon nanotube is dispersed in an extremely uniform manner, allowing an increase in dynamic strength of the polymer and so on. Therefore, the polymer composite of the present invention is extremely strong as well as light weight, so that extensive applications of the carbon nanotube, such as a functional or structural material containing a carbon nanotube can be realized. Thus, the utility of the polymer composite of the present invention is extremely high.

According to another aspect of thepresent invention, amethod for producing polymer composite includes preparing a mixture solution by mixing the carbon nanotube dispersion liquid in accordance with the above aspect of the invention and a polymer solution obtained by dissolving a polymer in a second solvent, and volatilizing the polar solvent and the second solvent from the mixture solution. Here, prior to preparing the mixture solution, the method may include preparing the polymer solution by dissolving the polymer in the second solvent.

It is difficult to secure a stable dispersion state of the carbon nanotube even though the carbon nanotube is directly dispersed in the polymer solution. On the other hand, even if the polymer is mixed with the carbon nanotube dispersion liquid, the polymer cannot be easily dissolved or the dispersion stability of the carbon nanotube can be affected. However, the states of dispersion and dissolution of the carbon nanotube and the polymer solution can be maintained by dispersing the carbon nanotube in the polar solvent having a compatibility with the polymer solution in advance. Therefore, according to the method for producing the polymer composite of the present invention, it is possible to produce a polymer composite in which a carbon nanotube is uniformly dispersed without being mixed with an impurity such as a surfactant.

In the method for producing the polymer composite of the present invention, the polar solvent and the polymer solution may preferably be compatible with each other, and the polar solvent and the second solvent may preferably be the same solvent. As the polar solvent and the polymer solution are compatible with each other, the mixing of the polymer solution and the carbon-nanotube dispersion liquid of the present invention can be appropriately performed by the operation in the process of preparing the mixture solution, allowing the production of a polymer composite with an extremely high uniform dispersion of the carbon nanotube. The highest compatibility between the polar solvent and the second solvent can be attained when both solvents are identical, so that this combination is most preferable.

### Brief Description of the Drawings

Fig. 1 is a schematic diagram for illustrating a measuring method in the estimation of the dispersion stability of a dispersion liquid;
Fig. 2 is a graph that represents an infrared absorption spectrum of a collected condensation (carbon nanotube carboxylic acid) ;
Fig. 3 is a graph that represents an infrared absorption spectrum of the material itself of the MWNT.
Fig. 4 is a microphotograph (1,100 times) of a carbon nanotube dispersion liquid of Example 1, which is observed directly by the optical microscope;
Fig. 5 is a microphotograph (1,100 times) of a carbon nanotube dispersion liquid of Example 2, which is observed directly by the optical microscope;
Fig. 6 is a microphotograph (1,100 times) of a carbon nanotube dispersion liquid of Comparative Example 1, which is observed directly by the optical microscope;
Fig. 7 is a microphotograph (1,100 times) of a carbon nanotube dispersion liquid of Comparative Example 2, which is observed directly by the optical microscope;
Fig. 8 is a microphotograph (1,100 times) of a polymer composite of Example 3, which is observed directly by the optical microscope;
Fig. 9 is a microphotograph (1,100 times) of a polymer composite of Comparative Example 3, which is observed directly by the optical microscope; and
Fig. 10 is a graph that represents the results of measuring a storage elastic modulus with variations in temperature with respect to the polymer composite and one including only the polymer as described in Example 3 and Comparative Example 3.

### Detailed Description of the Preferred Embodiment

Hereinafter, the present invention will described in detail for every aspect of the invention.

### [Carbon-nanotube dispersion liquid]

Thecarbon-nanotubedispersionliquidofthepresentinvention is prepared by dispersing a carbon nanotube modified with a basic or acidic functional group in a polar solvent having a polarity opposite to the polarity of the functional group.

Furthermore, in the case of obtaining a polymer composite using the carbon nanotube dispersion liquid of the present invention, a polymer and optionally a second solvent or the like as required may be contained. In the following description, the constituents of the carbon nanotube dispersion liquid will be individually described in detail.

### (Carbon nanotube)

Carbon nanotubes useful in the present invention may include SWNT and MWNT. Typically, the SWNT is more flexible and reactive, compared with the MWNT. In other words, the MWNT loses its flexibility compared with the SWNT. There is a tendency that the MWNT becomes inflexible and the reactivity thereof becomes sluggish as the MWNT becomes multi-layered. It is desirable to properly select and use one of the SWNT and the MWNT depending on the purposes in consideration of the features of the SWNT and the MWNT.

Furthermore, the carbon nanotubes useful in the present invention may further include those having no exact tubular shape, such as a carbon nanohorn which is one of the varieties of a single layer carbon nanotube (shaped like a horn the diameter of which increases continuously from one end to the other end), a carbon nanocoil (shaped like a coil and spirally extended as a whole), a carbon nanobead (having a tube in at its center, which is shaped such that an opening passes through a spherical bead made of amorphous carbon or the like), a cup-stack type nanotube, and a carbon nanotube having an outer peripheral surface covered with the carbon nanohorn or amorphous carbon.

Furthermore, the carbon nanotube useful in the present invention may further include carbon nanotubes in which some materials are included, such as a metal-included carbon nanotube in which a metal or the like is included in the carbon nanotube and a peapod nanotube in which fullerene or metal-included fullerene is included in the carbon nanotube.

As described above, in the present invention, the carbon nanotubes useful in the present invention may further include those having any shapes in addition to the typical carbon nanotubes, such as variations of the typical carbon nanotubes and carbon nanotubes having various modifications. These carbon nanotubes can be used without problems because of the reactivities thereof. Therefore, all of these carbon nanotubes fall into the conception of the term "carbon nanotube" used in the present invention.

The synthesis of each of these carbon nanotubes can be performed using one an arc-discharge method, a laser-ablation method, and a CVD method which are well known in the art. However, the present invention is not restricted to one of these methods.

The length and diameter (thickness) of the carbon nanotube applicable in the present invention is not limited in particular. However, the length of the typical carbon nanotube is in the range of 10 nm to 1000 µm, preferably in the range of 100 nm to 100 µm. The length and diameter (thickness) of the carbon nanotube applicable in the present invention is typically in the range of 1 nm to 5 µm, but not particularly limited thereto. For an application in which a carbon nanotube having appropriate flexibility is desired, the diameter of the carbon nanotube may be preferably in the range of 3 nm to 1 µm.

The content of carbon nanotube in the carbon-nanotube dispersion liquid (hereinafter, also simply referred to as a "dispersion liquid") cannot be completely defined because it varies depending on the intended purposes. In addition, the content of the carbon nanotube is also effected by any of physical and chemical properties of the carbon nanotube, such as length and thickness, the type of the layered structure (mono or multiple layer structure), the type and amount of a functional group which the carbon nanotube has, and the type and amount of a polar solvent described in detail below. Therefore, the content of the carbon nanotube may be suitably selected according to the purposes.

Concretely, a preferable percentage of the carbon nanotube, but not including the mass of the functional group, may be in the range of about 0.0001 to 50% by weight, preferably in the range of about 0.01 to 1.0% by weight with respect to the total amount of the dispersion liquid.

When the purity of the carbon nanotube to be used is not high, it is desirable to increase the purity of the carbon nanotube by purifying the carbon nanotube prior to the preparation of the dispersion liquid. In the present invention, it is more preferable when the purity is higher. In particular, it is preferable that the purity be 90% or more, more preferably 95% or more. The method for purifying the carbon nanotube is not restricted in particular. In other words, any conventional method may be adopted.

### (Functional group)

In the present invention, a functional group to be included in the carbon nanotube is not particularly limited. Any functional group can be selected as far as the functional group can be chemically added to the carbon nanotube and represents a basic or acidic polarity. Concretely, the acidic functional groups include a carboxyl group, a sulfone group, a phosphon group, a peroxicarboxylic acid group, and a carbodithio acid group. On the other hand, the basic functional groups include an amino group, a cyano group, and an imino group. However, the present invention is not limited to these listed groups. Among them, the carboxyl group is particularly preferable because it can be introduced comparatively easily and shows its acidity well in addition to its high stability.

In the present invention, it is preferable that the introduction amount of each of these functional groups be as high as possible in view of an improvement in dispersion stability. However, an increase in introduction amount of the functional group leads to variations in characteristics (particularly electric characteristics) of the carbon nanotube. Depending on the purposes, itmaybemoredesirablethattheintroductionamountofthefunctional group be not too much. In the case of SWNT or MWNT which is not of a sufficient multiple layer structure, the introduction of many functional groups may destroy the carbon nanotube structure itself. Therefore, depending on the purpose and the type of a carbon nanotube to be used, the introduction amount of the functional group may be suitably selected.

Furthermore, if the introduction amount of the functional group is small, the dispersion stability of the dispersion liquid cannot be increased as a matter of fact. However, an increase in dispersion stability can be surely observed compared with a dispersion liquid to be obtained by dispersing a carbon nanotube without being subjected to any process and without containing any impurity such as a surfactant.

In the present technical level, there is no quantitative method for determining the degree of chemical modification on the carbon nanotube. However, the carbon nanotube dispersion liquid of the present invention is presumed that the dispersion stability will increase generally depending on the number of the functional group, even though the dispersion stability is also depends on the types of the introduced functional group and the polar solvent. Therefore, the introduction amount of the functional group can be estimated in inverse operation by evaluating the dispersion stability of the dispersion liquid.

Furthermore, a method for evaluating the dispersion stability of the dispersion liquid will be explained in the section of "Method for producing a carbon nanotube dispersion liquid" described below. In addition, a method for introducing a functional group into a carbon nanotube will be also described in the same section of "Method for producing a carbon nanotube dispersion liquid".

### (Polar solvent)

The polar solvent useful in the present invention is not limited in particular as far as the solvent represents basic or acidic polarity. However, it is desired that the polarity of the polar solvent should be opposite to the functional group of the carbon nanotube to be dispersed. In addition, the polar solvent may be an aqueous solution or an organic solvent. The concrete examples of the polar solvent include the follows.

The aqueous solvents may include: acidic solutions such as organic carboxylic acid (e.g., acetic acid), hydrochloric acid, sulfuric acid, and an organic sulfonic acid solution; and basic solutions such as ammonia water, a sodium hydroxide solution, a sodium carbonate solution, and other various alkaline water solutions. However, the aqueous solvent is not particularly limited.

The organic solvents may include: basic solvents such as pyridine, N-methylpyrrolidone, N,N-dimethyl formamide, and hexamethyl phosphonic amide; and acidic solvents such as dimethyl sulfoxide and sulfolane although not specifically limited thereto.

[Method for producing carbon nanotube dispersion liquid]

The method for producing a carbon nanotube dispersion liquid of the present invention includes an addition process and a dispersion process. In addition, after the dispersion process, a state-confirming process may be included if required. Hereinafter, the respective processes will be individually explained in detail.

### (Addition process)

In the method for manufacturing a carbon nanotube dispersion liquid of the present invention, the addition process is for introducing a basic or acidic functional group into a carbon nanotube. The introduction method cannot be completely defined because it is changed depending on the types of the functional groups. The desired functional group may be directly added. Alternatively, a desired functional group may be obtained by introducing a functional group, which can be easily added at first, and then conducting operation such as substituting the functional group or a part thereof, adding another functional group thereto, or the like.

The operation of the addition process is not particularly limited. Any conventional method may be adopted. For example, a carboxyl group can be introduced into the surface of the carbon nanotube by heating the carbon nanotube in nitric acid. Alternatively, a carbon nanotube is reacted with nitric acid and sulfuric acid to generate a nitrated nanotube. Then, the nitrated nanotube may be reduced to introduce an amino acid into the surface of the carbon nanotube.
Furthermore, various kinds of the methods are disclosed in JP 2002-503204 A. Depending on the purpose, each of the methods can be utilized in the present invention.

The method for introducing a carboxyl group, which is particularly preferable among the above-mentioned functional groups, into the carbon nanotube will be described.

For introducing the carboxyl group into the carbon nanotube, the carboxyl group may be refluxed together with an acid having an oxidization action. This operation is preferable because it can be performed comparatively easily and the carboxyl group having sufficient reactivity can be added to the carbon nanotube. Now, this operation will be explained simply.

The acids having oxidizing reactions may include concentrated nitric acid, hydrogen peroxide, a mixture of sulfuric acid and nitric acid, and chloroazotic acid. In particular, when concentrated nitric acid is used, the concentration thereof may be preferably 5% by weight or more, more preferably 60% by weight or more.

The reflux may be performed by conventional procedures and the temperature thereof is preferably almost at the boiling point of the acid to be used. For example, concentrated nitric acid is preferably in the range of 120 to 130°C. In addition, the reflux time is preferably in the range of 30 minutes to 20 hours, more preferably in the range of 1 hour to 8 hour.

In the reaction solution after the ref lux, the carbon nanotube being added with carboxylic acid (the carbon nanotube carboxylic acid) is generated. Then, the product is cooled to room temperature and separation operation or washing is conducted optionally. Thus, the objective carbon nanotube can be obtained.

Furthermore, there is another method in which a mechano-chemical force (e.g., caused by the treatment with a ball mill or a mortar) is applied on the carbon nanotube to partially destroy or modify the graphene sheet on the surface of the carbon nanotube to form defects (radicals) and various kinds of functional groups may be introduced therein. Alternatively, the method may be combined with another method for chemical introduction. In the case of MWNT and so on, which are difficult to react only by the chemical introduction method, the introduction amount of the functional group increases when both methods are combined together.

In this case, the defects (radical-generating portion) of the nanotube surface can be increased or reduced by alternating various kinds of conditions such as the stress of the treatment with a ball mill or a mortar and the time, controlling the chemical modification by the acid treatment or the like in the subsequent step. Even in the case of the MWNT, which generally does not react easily, pretreatment with a mechano-chemical treatment allows the subsequent chemical modification to be simply performed. Furthermore, the mechano-chemical treatment allows variations in the length of carbon nanotube.

In addition to the mechano-chemical treatment (when the mechano-chemical treatment is performed, the subsequent process is performed), the dispersion stability into the solvent of the carbon nanotube, which is modified with the obtained functional group, can be suitably controlled as a result of a chemical reaction such as extending the acid-treatment time, increasing the temperature, and so on to make the radical portion to easily induce the chemical modification.

### (Dispersion process)

In the method for producing a carbon nanotube dispersion liquid of the present invention, the "dispersion process" is a process in which a carbon nanotube being modified with the functional group obtained in the addition process is dispersed in a polar solvent having a polarity opposite to the polarity of the functional group.

At the time of dispersion, the carbon nanotube being modified with the functional group is introduced into the polar solvent, followed by simply stirring with a spatula, an agitator with an agitating blade, a magnetic stirrer, or an agitation pump. For more uniformly dispersing the carbon nanotube to increase its storage stability, it is also possible to disperse the carbon nanotube in the solvent with a strong force by using an ultrasonic disperser, a homogenizer, or the like. However, in the case of using a stirrer having a strong shearing force of agitation, the carbon nanotube being contained may be cut or damaged, so that the dispersion is completed within a short time. In the ultrasonic disperser as well, the dispersion liquid of the present invention has excellent dispersibility, so that the dispersion may be performed within a short time.

### (State- confirming process -method for evaluating dispersion stability of dispersion liquid)

In the method for producing a carbon nanotube dispersion liquid of the present invention, the state-confirming process is a process for confirming a dispersion state in which a precipitating surface is 20% or less of an upper portion when the dispersion liquid t is rested for 1 hour at normal temperatures if required without causing a sedimentary surface.

The state-confirming process is not an essential process for the present invention. However, there is achieved an effect that the dispersion stability of the dispersion liquid can be evaluated and the introduction amount of the functional group to the carbon nanotube can be inversely estimated as described above.

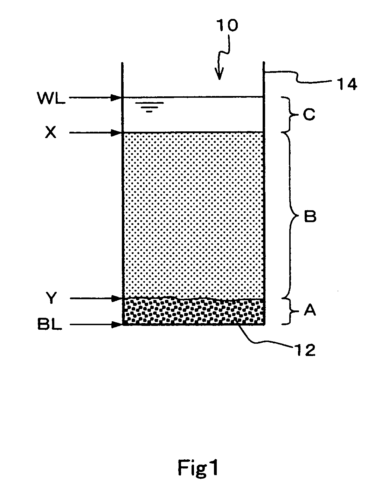

Generally, a certain dispersion liquid is rested. The dispersion being dispersed is coagulated and precipitated in proportion with the time elapse. During this process, the dispersion liquid becomes a state of being divided into three layers at maximum. This state is shown in Fig. 1. Fig. 1 shows a state in which a predetermined time is passed after housing a dispersion liquid 10 in a container 14. That is, the dispersion liquid 10 becomes a state in which the dispersion liquid 10 is divided into three regions A, B, and C. In the region A, a dispersion 12 was coagulated and precipitated to be stacked. In the region B, the dispersion 12 is dispersed and becomes a suspension. In the region C, there is formed a clear supernatant. At this time, a boundary Y between the region A and B is referred to as a sedimentary surface, whereas a boundary X between the region B and the region C is referred to as a precipitating surface. Now, the WL represents a liquid surface and the BL represents the bottom of the BL, respectively.

The operation in the state-confirming process (inotherwords, a method for evaluating the dispersion stability of the dispersion liquid) uses a graduated cylinder (10 cc) having a diameter of 1 cm as a container 14. A carbon nanotube dispersion liquid to be used in the examination as a dispersion 12 is charged in the container 14 and is then rested for 1 hour at normal temperatures (preferably 25 to 30°C) . Subsequently, the height of the precipitating surface X and the height of the sedimentary surface Y are measured.

At this time, for obtaining a carbon-nonotube dispersion liquid having favorable dispersion stability, the dispersion liquid is preferable to be in a dispersion state where the precipitating surface is 20% or less of the upper portion without causing a sedimentary surface. Here, the expression "precipitation surface is 20% or less of the upper portion" means as shown in Fig. 1 the length from the liquid surface WL to the precipitating surface X (corresponding to the volume of the region C) is 20% or less of the length from the liquid surface WL to the bottom surface BL of the container (corresponding to the volume of the dispersion liquid 10) . It is shown that the dispersion stability is better as this numeric value is smaller. In the carbon nanotube dispersion liquid of the present invention, the numeric value is preferably 10% or less, more preferably 5% or less, most preferably 0% (the precipitating surface cannot be visually observed).

Here, the expression of "no sedimentary surface develops" corresponds to the expression of "no sediment".

### [Polymer composite and method for producing the same]

The polymer composite of the present invention is obtained by volatilizing at least the polar solvent (if another solvent is further added, then this solvent should be also volatilized) from at least polymer solution which is incorporated in the carbon nanotube dispersion liquid of the present invention.

The polymer useful in the present invention is not particularly limited as far as it is capable of forming a polymer composite, so that any polymer can be used. An aqueous polymer or a non-aqueous polymer is used. However, there is a condition that the polymer should be dissolved in the polar solvent to be dissolved and a second solvent described below.

The aqueous polymers include polyvinyl alcohol, polyvinyl pyrrolidone, and various kinds of cellulose, but are not particularly limited thereto as far as they react with the solvent. In addition, non-aqueous polymers include various kinds of the resin, such as polyimide, polyamide, polystyrene, polyester, acryl, and polyurethane, but not specifically limited thereto.

Considering the formability of the polymer composite, the amount of the polymer may be higher than usual as far as the viscosity of the polymer does not increase too much. Using the dispersion liquid of the present invention is also capable of substantially increasing this concentration of the polymer. Concretely, the amount of the polymer may be in the range of 0.1 to 70% by weight, preferably 10 to 30% by weight with respect to the total amount (total amount of the solvent) of the polar solvent and the second solvent described below.

For obtaining the mixture solution, the polymer may be included and dissolved in the carbon nanotube dispersion liquid of the present invention described above. In this case, for increasing the solubility as high as possible, it is desirable to make an action of heating the dispersion liquid or crashing the polymer components. However, such an action is not sufficient for achieving satisfactory solubility of the polymer. Thus, it becomes difficult to produce a uniform polymer composite because of insufficient dissolution. In addition, such insufficient dissolution may affect the dispersion stability of the carbon nanotube at the time of dissolution. Therefore, for producing a polymer composite using the carbon nanotube dispersion liquid of the present invention, it is preferable to depend on the method for producing a polymer composite of the present invention.

The method for producing a polymer composite of the present invention includes preparing a mixture solution by mixing a polymer solution in which a polymer is dissolved in a second solvent, and the carbon nanotube dispersion liquid of the present invention; and volatilizing the polar solvent and the second solvent from the mixture solution. Furthermore, prior to preparing the mixture solution, the method may include preparing a polymer solution by dissolving the polymer in the second solvent. Each of these processes will be described below.

### (Preparation of polymer solution)

The preparation of the polymer solution is the process for preparing a polymer solution by dissolving a polymer in a second solvent.

The second solvent useful in the present invention may be any solvent as far as it is able to dissolve a polymer as a target of the dissolution. However, for obtaining a stable mixture in the subsequent process of preparing a mixture solution, it is preferable that the polar solvent is compatible with the polymer, which is a solvent used for dispersion of carbon nanotube. The term "compatible" indicates a state in which the phase separation of the solvents does not occur and the polymer is not precipitated by mixing both solutions in the preparation of a mixture solution. Furthermore, the compatible state depends on conditions such as: the combination of the polar solvent, the second solvent, and the polymer; the mixing ratio of the carbon nanotube dispersion liquid and the polymer solution; the temperature of the polymer. Thus, the second solvent can be suitably selected depending on these conditions. In order to reconcile the compatibility of between solvents and polymer, the second solvent may be preferably the same solvent as the polar solvent used for dispersing the carbon nanotube.

The concrete examples of the second solvent useful in the present invention include various solvents already described as the polar solvents and also include: organic solvents such as methanol, ethanol, isopropanol, n-propanol, butanol, methylethylketone, toluene, benzene, acetone, chloroform, methylene chloride, acetonitrile, diethyl ether, and tetrahydrofuran (THF); and water.

The amount of the second solvent to be used is not particularly limited except that it should be enough to dissolve the polymer. An appropriate amount may be given as the total amount of the solvent including the polar solvent provided that the dispersion stability of the carbon nanotube is not disturbed.

### (Preparation of mixture solution)

The preparation of a mixture solution includes mixing a polymer solution prepared by dissolving a polymer in a second solvent and the carbon nanotube dispersion liquid of the present invention.

The polymer solution may be prepared as described above, or may be one commercially available.

The carbon nanotube dispersion liquid has been already highly dispersed as described above, so that there is no need of a specific mixing operation and both solutions may be simply mixed. Generally, the carbon nanotube dispersion liquid is gradually added to the polymer solution while stirring. At this time, the mixture solution may be suitably stirred with a spatula, an agitator with an agitating blade, a magnetic stirrer, or an agitation pump.

The resulting mixture solution may be appropriately subjected to deforming. The deforming operation can be performed by leaving the mixture solution in vacuum for predetermined time (2 to 24 hours).

### (Volatilization)

In the volatilization process, the polar solvent and the second solvent are volatilized from the mixture solution prepared in the process of preparing a mixture solution.

The operation of preparing a mixture solution is performed in any container. There is a need of arranging the prepared mixture solution in a predetermined position, except for the case where the polymer composite is to be produced in the container . Concretely, the operation may include the application of the mixture solution on the predetermined position and also housing the same in a predetermined container. The application method is not particularly limited and any of the conventional methods such as a spin coating, a dip coating, a dropping, a roll coating, and a wire bar coating may be employed.

The operation of volatilizing the solvents in the process of volatilizing varies depending on the types of the polar solvent and the second solvent used. Ingeneral, however, the volatilization may be performed by simply leaving the solvent as it is to naturally volatilize the solvent. Alternatively, the solvent may be forcefully volatilized by heating. In the present invention, any volatilization method may be selected.

The polymer composite of the present invention is manufactured by passing through the operations of the respective processes.

In general, the dispersion of a typical filler in a resin makes the matrix strong. In the case of the polymer composite of the present invention, a carbon nanotube is highly dispersed by the carbon nanotube dispersion liquid of the present invention and is arranged without modification. Thus, the carbon nanotube corresponding to the filler forms a strong structure in the matrix, and provides extremely high toughness as a whole. Therefore, the present invention can be suitably applied as an alternative material for a structure using the conventional metal, particularly light-weight and high-strength noble metal such as titanium.

### <Control of viscoelasticity of polymer composite>

As described above, a high-toughness polymer can be obtained using the method for producing a polymer composite of the present invention. The toughness of the polymer composite can be also controlled and identified by measuring the viscoelasticity of the polymer composite to be obtained. Hereinafter, the concrete techniques for control and identification of the toughness of the polymer composite will be described.

### (Concentration of carbon nanotube)

In the process of preparing the mixture solution, increasing the concentration of the carbon nanotube in the mixture solution may increase the density of the polymer composite and may make the openings in the net smaller. Thus, according to the method for manufacturing a polymer composite of the present invention, the structure of the polymer composite to be obtained can be suitably controlled by adjusting the concentration of the carbon nanotube in the mixture solution.

### (Basicity and acidity of polar solvent)

During the period from the production of the carbon nanotube dispersion liquid to the preparation of the mixture solution, and furthermore just before the arrangement to the desired position prior to the volatilization, the dispersion stability of the carbon nanotube modified with the functional group can be changed by controlling the pH and so on (i.e., the basicity or acidity) of the polar solvent. Therefore, the dispersion state of the carbon nanotube in the polymer can be controlled and thus the dynamic strength of the polymer composite can be also controlled.

### [Example]

Hereinafter, the present invention will be described in detail with reference to the examples. However, the present invention is not restricted to the following examples.

### <Example 1>

### Materials:

(a) MWNT (95% in purity, manufactured by Science Laboratory Co., Ltd.) 0.02 g
(b) Concentrated nitric acid (60% by mass) 14 g
(c) Pyridine

First of all, a carbon nanotube was ground with a mortar for 5 minutes in advance to make the surface of the carbon nanotube to be easily reacted, and then a mechano-chemical force was applied thereon. The carbon nanotube was added to the concentrated nitric acid and then the mixture was refluxed in an oil bath (120 °C) for 4 hours. After that, centrifugation and decantation were repeated until the pH of the supernatant shifted to neutral (pH = 6 or more), Subsequently, the resulting dispersion liquid was dried up and the modified carbon nanotube (aggregation) was obtained (the addition process so far). Here, the carboxyl group of the modified carbon nanotube released as the pH shifted to neutral that increases dispersibility of the carbon nanotube. Therefore, in the present example, centrifugation and decantation were repeated until the dispersion liquid became in a sufficient suspended condition.

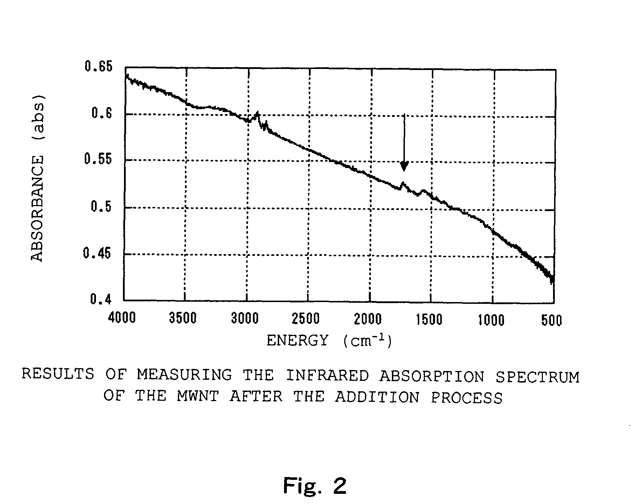

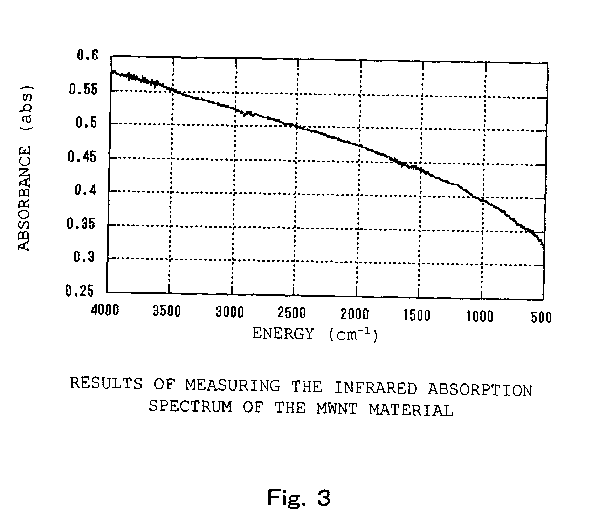

The results of measuring the infrared absorption spectrum of the collected condensation are shown in Fig. 2. In addition, the infrared absorption spectrum of the used MWNT material itself is shown in Fig. 3. As is evident from the comparison between both spectrums, the absorption of 1735cm⁻¹ (the arrowed portion in Fig. 2) specific to carboxylic acid, which could not be observed in the MWNT material itself, was observed in the condensation. From this, it is found that the carboxyl group was introduced into the carbon nanotube through the reaction with nitric acid. That is, it was confirmed that the aggregation was a carbon nanotube carboxylic acid.

The obtained aggregation of the carbon nanotube carboxylic acid was added to pyridine so as to be 0.05% by weight, and then the mixture was dispersed with an ultrasonic disperser (120 W in output, US-2, manufactured by SND Co., Ltd.) for 1 minutes. Consequently, a carbon nanotube dispersion liquid of Example 1 was prepared (Dispersion process, so far).

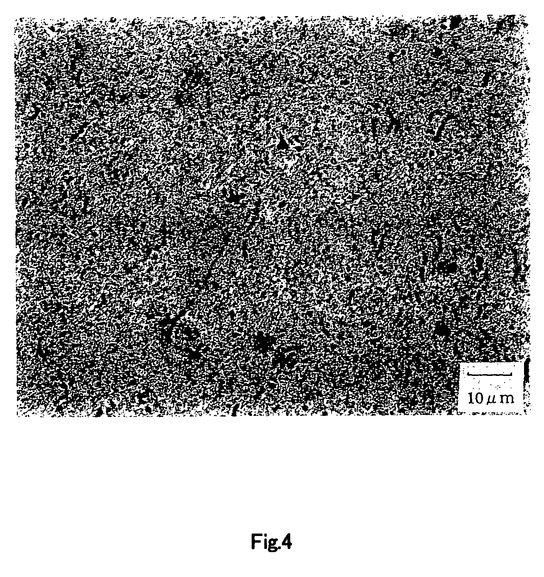

One or two drops of the obtained carbon nanotube dispersion liquid was dropped on a glass substrate, a cover glass was mounted thereon and then the glass substrate was observed with an optical microscope. The microphotograph (1,100 times) is shown in Fig. 4. As shown in the figure, it turned out that the carbon nanotube was dispersed finely and became a uniform dispersion liquid.

In addition, the evaluation on the dispersion stability of the obtained carbon nanotube dispersion liquid was performed using the method described above. As a result, there were no precipitating surface and sedimentary surface observed. Furthermore, after the examination, the dispersion liquid was rested for one week. However, there were no precipitating surface and sedimentary surface observed. It was confirmed that the resulting carbon nanotube dispersion liquid of the present example had extraordinary high dispersion stability.

### <Example 2>

### Materials:

(a) MWNT (95% in purity, manufactured by Science Laboratory Co., Ltd.) 0.02 g
(b) Concentrated nitric acid (60% by mass) 14 g
(c) Pyridine

First of all, in the same manner as in Example 1, a mechano-chemical force was applied to a carbon nanotube. The carbon nanotube was added to the concentrated nitric acid and then the mixture was refluxed in an oil bath (120 °C) for 4 hours. After that, in the same manner as in Example 1, when the pH of the supernatant shifted to neutral, the resulting dispersion liquid was dried and then the aggregation of a carbon nanotube carboxylic acid was obtained (addition process so far).

The obtained condensation of the carbon nanotube carboxylic acid was added to pyridine so as to be 0.1% by weight, and then the mixture was dispersed in the same manner as in Example 1. Consequently, a carbon nanotube dispersion liquid of Example 2 was prepared (Dispersion process, so far).

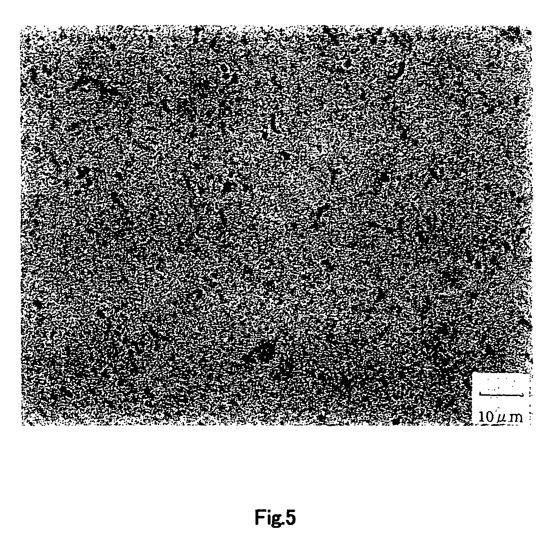

Fig. 5 is a microphotograph (1,100 times) of the obtained carbon nanotube dispersion liquid, which is observed in the same manner as in Example 1. As shown in the figure, it turned out that the carbon nanotube was dispersed finely and became a uniform dispersion liquid.

In addition, the evaluation on the dispersion stability of the obtained carbon nanotube dispersion liquid was performed using the method described above. As a result, there were no precipitating surface and sedimentary surface observed. Furthermore, after the examination, the dispersion liquid was rested for one week. However, there were no precipitating surface and sedimentary surface observed. It was confirmed that the resulting carbon nanotube dispersion liquid of the present example had extraordinary high dispersion stability.

### <Comparative Example 1>

### Materials:

(a) MWNT (95% in purity, manufactured by Science Laboratory Co., Ltd.)
(b) RHEODOL SP-030 (manufactured by Kao Corporation, surfactant) 0.1 g
(c) N-methyl pyrrolidone 9.9 g

A 1% by mass solution of RHEODOL SP-030 in N-methyl pyrrolidone was prepared. Then, untreated carbon nanotube was added to the solution and the resultant solution was then dispersed by an ultrasonic disperser (120 W in output, US-2, manufactured by SND Co., Ltd.) for 5 minutes to obtain a 0.05% dispersion liquid of carbon nanotube.

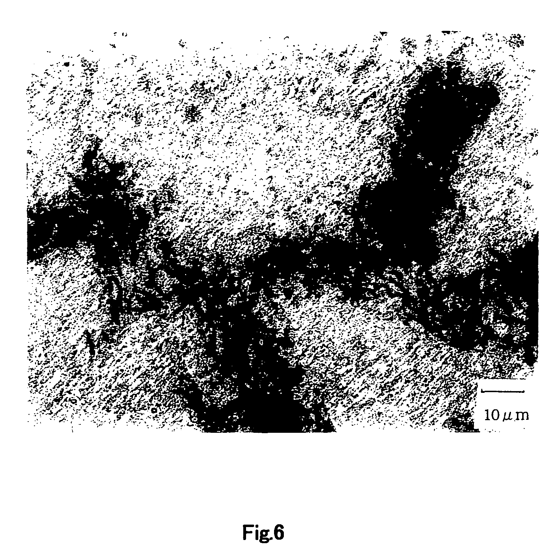

A microphotograph (1,100 times) obtained by observing the resulting carbon nanotube dispersion liquid in the same manner as that of Example 1 is shown in Fig. 6. The microphotograph shows that the carbon nanotube was coagulated and dispersed in a state of being unevenly distributed, resulting in an uneven dispersion liquid.

Furthermore, the evaluation on the dispersion stability of the obtained carbon nanotube dispersion liquid was performed by the method described above. As a result, the precipitating surface was 30% of the upper portion. In addition, the presence of the sedimentary surface was confirmed since the precipitate was slightly observed.

### <Comparative Example 2>

### Materials:

(a) MWNT (95% in purity, manufactured by Science Laboratory Co., Ltd.)
(b) RHEODOL SP-030 (manufactured by Kao Corporation, surfactant) 0.1 g
(c) N-methyl pyrrolidone 9.9 g

A 1% by mass solution of RHEODOL SP-030 in N-methyl pyrrolidone was prepared. Then, untreated carbon nanotube was added to the solution and the resultant solution was then dispersed by an ultrasonic disperser (120 W in output, US-2, manufactured by SND Co., Ltd.) for 5 minutes to obtain a 0.1% dispersion liquid of carbon nanotube.

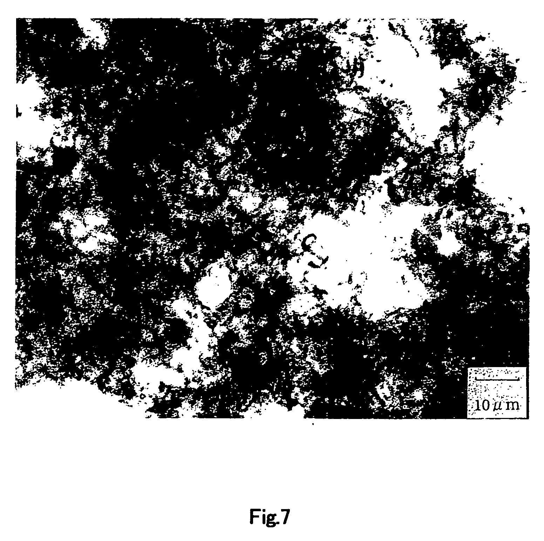

A microphotograph (1,100 times) obtained by observing the resulting carbon nanotube dispersion liquid in the same manner as that of Example 1 is shown in Fig. 7. The microphotograph showed that the carbon nanotube was coagulated and dispersed in a state of being unevenly distributed, resulting in an uneven dispersion liquid.

Furthermore, the evaluation on the dispersion stability of the obtained carbon nanotube dispersion liquid was performed by the method described above. As a result, the precipitating surface was 30% of the upper portion. In addition, the presence of the sedimentary surface was confirmed since the precipitate was slightly observed.

### <Example 3>

### Materials:

(a) MWNT (95% in purity, manufactured by Science Laboratory Co., Ltd.) 0.02 g
(b) Concentrated nitric acid (60% by mass) 14 g
(c) U-Varnish-A (A 20% by mass solution of polyimide precursor in N-methyl pyrrolidone, manufactured by Ube Industries, Co., Ltd.) 0.56 g
(d) Pyridine

### (Preparation of mixture solution)

The carbon nanotube dispersion liquid (1 g) obtained in Example 1 was mixed with 0.56 g of U-Varnish-A and the resultant solution was stirred well with a magnetic stirrer, followed by defoaming the resulting mixture in vacuum for 60 minutes to prepare a mixture solution.

### (Volatilization)

The obtained mixture solution was used and about 0.5 ml of the mixture solution was dropped on one side of a glass substrate using a Pasteur pipette to form a cast coat. Then, the glass substrate was heated at 210 °C for 60 minutes to volatilize the solvent, forming a film on the glass substrate. Furthermore, the glass substrate was placed in a desiccator and dried for 1 day.

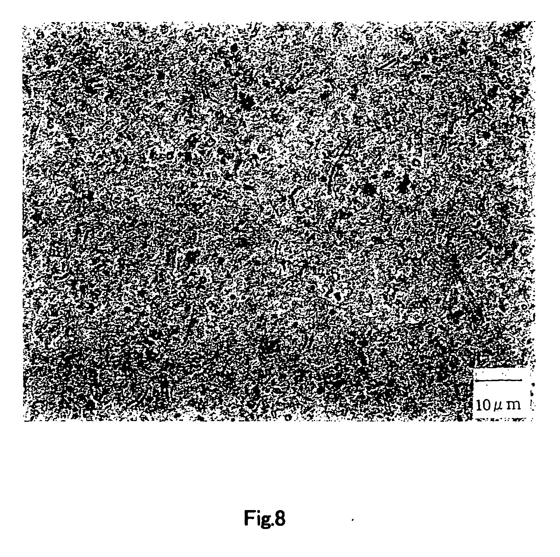

Consequently, a polymer composite of Example 3 was prepared. The resulting polymer composite was directly observed with an optical microscope. The obtained microphotograph ( at a magnificaiton of 1,100 times) is shown in Fig. 8. It is found that the carbon nanotube is dispersed clearly in the polymer and a uniform composite is obtained.

### <Comparative Example 3>

### Materials:

(a) MWNT (95% in purity, manufactured by Science Laboratory Co., Ltd.)
(b) RHEODOL SP-030 (manufactured by Kao Corporation, surfactant) 0.1 g
(c) U-Varnish-A (A 20% by mass solution of polyimide precursor in N-methyl pyrrolidone, manufactured by Ube Industries, Co., Ltd.) 0.56 g
(d) N-methyl pyrrolidone

### (Process 1)

The carbon nanotube dispersion liquid (1 g) obtained in Comparative Example 1 was mixed with 0.56 g of U-Varnish-A and the resultant solution was stirred well with a magnetic stirrer, followed by de foaming the resulting mixture in vacuum for 60 minutes to prepare a mixture solution.

### (Process 2)

The obtained mixture solution was used and about 0.5 ml of the mixture solution was dropped on one side of a glass substrate using a Pasteur pipette to forma cast coat. Then, the glass substrate was heated at 210 °C for 60 minutes to volatilize the solvent, forming a film on the glass substrate. Furthermore, the glass substrate was placed in a desiccator and dried for 1 day.

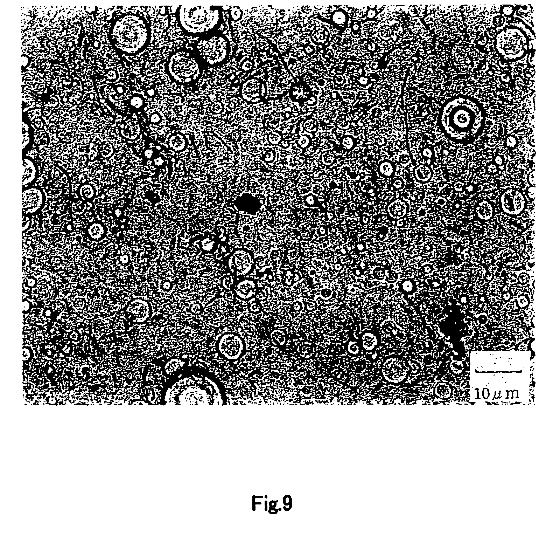

Consequently, a polymer composite of Comparative Example 3 was prepared. Theresultingpolymercompositewasdirectlyobserved with an optical microscope. The obtained microphotograph (1,100 times) is shown in Fig. 9. It is found that the carbon nanotube is dispersed in a nonuniform composite state.

### <Evaluation of storage modulus of polymer composite>

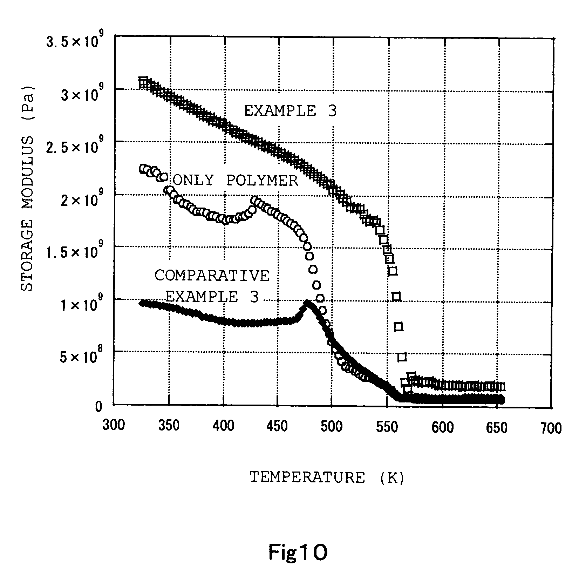

Storage moduli of the polymer composites of Example 3 and Comparative Example 3 were measured varying the temperatures thereof. In addition, the polymers used in these polymer composites were heated on glass substrates under the same conditions without mixing with the carbon nanotube dispersion liquid, followed by conducting the same measurement as described above (noted as "only polymer"). The results are shown in the graph of Fig. 10.

From the graph of Fig. 10, Example 3 in which the polymer composite was prepared using the carbon nanotube dispersion liquid of Example 1 having uniformly dispersed carbon nanotube showed almost a 50% increase in the storage modulus at 100°C (373K) and a 60°C increase in the glass transition temperature (Tg) with respect to those of only polymer.

As described above, according to the present invention, a carbon nanotube dispersion liquid having high dispersion stability, in which a carbon nanotube is distributed uniformly, can be produced. In addition, a polymer composite and a method for producing the polymer composite can be provided by improving the dispersibility of the carbon nanotube into a polymer to increase the dynamic strength of the polymer composite, the polymer composite allowing a wide variety of applications of carbon nanotube, such as electronic devices, functional devices, and other structural devices containing carbon nanotubes.

## Claims

1. A carbon nanotube dispersion liquid, comprising a carbon nanotube modified with a basic or acidic functional group, which is dispersed in a polar solvent having a polarity opposite to a polarity of the functional group.

2. A carbon nanotube dispersion liquid according to claim 1, wherein the carbon nanotube dispersion liquid is in such a dispersion state that, when the liquid is rested for 1 hour at room temperature, a precipitating surface is 20% or less of an upper portion of the carbon nanotube dispersion liquid without developing a sedimentary surface.

3. A method of producing a carbon nanotube dispersion liquid, comprising: adding, through introduction, a basic or acidic functional group to a carbon nanotube; and dispersing the carbon nanotube into a polar solvent having a polarity opposite to a polarity of the functional group.

4. A method of producing a carbon nanotube dispersion liquid according to claim 3, wherein the carbon nanotube dispersion liquid is in such a dispersion state that, when the carbon nanotube dispersion liquid is rested for 1 hour at room temperature after the dispersing, a precipitating surface is 20% or less of an upper portion of the carbon nanotube dispersion liquid without developing a sedimentary surface.

5. A polymer composite, which is obtained by volatilizing at least the polar solvent from a mixture solution containing at least a polymer in the carbon nanotube dispersion liquid according to claim 1.

6. A method for producing a polymer composite, comprising:
preparing a mixture solution by mixing a polymer solution obtained by dissolving a polymer in a second solvent and the carbon nanotube dispersion liquid according to claim 1; and
volatilizing the polar solvent and the second solvent from the mixture solution.

7. A method for producing a polymer composite according to claim 6, further comprising preparing the polymer solution by dissolving the polymer in the second solvent prior to preparing the mixture solution.

8. A method for producing a polymer composite according to claim 6, wherein the polar solvent and the polymer solution are compatible with each other.

9. A method for producing a polymer composite according to claim 6, wherein the polar solvent and the second solvent are the same solvent.
